Europäisches Patentamt

(19) European Patent Office

Office européen des brevets

(11) **EP 0 776 874 B1**

(12) **EUROPÄISCHE PATENTSCHRIFT**

(45) Veröffentlichungstag und Bekanntmachung des Hinweises auf die Patenterteilung:
**12.12.2001 Patentblatt 2001/50**

(51) Int Cl.[7]: **C05F 17/00**, G01N 5/04, G01N 33/24, G01N 25/48, G01N 33/497

(21) Anmeldenummer: **97102326.2**

(22) Anmeldetag: **01.09.1994**

(54) **Verfahren zur Ermittlung der bei der Kompostierung erzeugten Energie**

Process for the determination of energy generated in a composting process

Procédé de détermination de l'energie produite dans un procédé de compostage

(84) Benannte Vertragsstaaten:
**AT BE CH DE DK ES FR GB GR IT LI LU NL SE**

(30) Priorität: **08.10.1993 DE 4334435**

(43) Veröffentlichungstag der Anmeldung:
**04.06.1997 Patentblatt 1997/23**

(62) Dokumentnummer(n) der früheren Anmeldung(en) nach Art. 76 EPÜ:
**94113723.4 / 0 647 604**

(73) Patentinhaber: **HERHOF UMWELTTECHNIK GmbH**
**D-35606 Solms-Niederbiel (DE)**

(72) Erfinder: **Schnorr, Karl-Ernst, Dipl.-Ing.**
**35633 Lahnau (DE)**

(74) Vertreter: **Zinnecker, Armin, Dipl.-Ing. et al Lorenz-Seidler-Gossel,**
**Widenmayerstrasse 23**
**80538 München (DE)**

(56) Entgegenhaltungen:
**EP-A- 0 458 136      DE-A- 3 115 807**
**DE-A- 3 829 018      DE-A- 4 122 943**

**Beschreibung**

Die Erfindung betrifft ein Verfahren zur Ermittlung der Energie, die bei der Kompostierung von organischen Stoffen (Rottegut) in einem geschlossenen Behälter unter Zwangsbelüftung mikrobiologisch erzeugt wird. Ferner beschrieben ist ein Verfahren zur Ermittlung der Menge des Wassers, das bei der Kompostierung von organischen Stoffen (Rottegut) in einem geschlossenen Behälter unter Zwangsbelüftung mikrobiologisch gebildet wird.

Auch beschrieben ist ein Verfahren zur Ermittlung der Menge des Wassers, das bei der Kompostierung von organischen Stoffen (Rottegut) in einem geschlossenen Behälter unter Zwangsblüftung mikrobiologisch gebildet wird. Die Erfindung betrifft ferner ein Verfahren zur Steuerung und/oder Regelung eines Verfahrens zum Kompostieren von organischen Stoffen (Rottegut, bei dem das Rottegut in einem geschlossenen Behälter unter Luftzuführung biologisch abgebaut wird.

Schließlich betrifft die Erfindung ein Verfahren zum Kompostieren von organischen Stoffen (Rottegut), bei dem das Rottegut in einem geschlossenen Behälter unter Luftzuführung biologisch abgebaut wird, wobei zumindest ein Teil der Abluft dem Rottegut erneut zugeführt wird und wobei die Abluft gekühlt und der darin enthaltene Wasserdampf zumindest zum Teil auskondensiert wird.

Aus der DE-OS 41 07 340 ist ein Verfahren zum Kompostieren von organischen Stoffen (Rottegut) bekannt. Nach diesem Verfahren werden organische Stoffe in einem geschlossenen Behälter unter Zwangsbelüftung kompostiert. Ein Teil der Abluft wird dem Rottegut erneut zugeführt. Ferner wird dem Rottegut reiner Sauerstoff zugeführt.

Aus der DE-OS 36 37 393 ist ein Verfahren bekannt, bei dem organische Stoffe unter Luftzuführung in einem geschlossenen Behälter mikrobiell abgebaut werden. Der geschlossene Behälter besitzt eine Bodenfläche, in der eine Vielzahl von Löchern angeordnet ist, die gleichmäßig über die Bodenfläche verteilt sind, so daß die auf der Bodenfläche zu einem Haufwerk aufgeschütteten organischen Stoffe gleichmäßig von der Zuluft durchströmt werden.

In dem Rottegut werden organische Stoffe mikrobiell abgebaut. Dabei werden die organischen Stoffe mit Sauerstoff (aerob) umgesetzt, wodurch Kohlendioxid $CO_2$ und Wasser $H_2O$ entstehen. Das Kohlendioxid und das Wasser werden mit der Abluft aus dem Rottegut und dem geschlossenen Behälter heraustransportiert. Ferner wird auch das sogenannte freie Wasser mit der Abluft aus dem Rottegut herausbefördert, und zwar ebenfalls als Wasserdampf. Bei diesem freien Wasser handelt es sich zum einen um Oberflächenwasser, welches bereits beim Beladen des geschlossenen Behälters mit dem Rottegut in den geschlossenen Behälter hineingelangt, zum anderen um Zellwasser, also Wasser, das in den Zellen der organischen Stoffe von Anfang an als Wasser vorhanden ist.

Um das Wasser mit der Abluft aus dem geschlossenen Behälter heraustransportieren zu können, muß das in flüssiger Form vorliegende Wasser verdampft werden. Hierfür muß Energie aufgewendet werden. Diese Energie stammt aus dem Rotteprozeß; sie wird von den Mikroorganismen, die den Rotteprozeß bewirken, erzeugt.

Um den Frischluftbedarf herabzusetzen, ist es wünschenswert, das Verfahren im Umluftbetrieb zu betreiben, die Abluft also dem Rottegut erneut zuzuführen. Hierdurch kann sich allerdings der Feuchtigkeitsgehalt bzw. Wassergehalt in dem Rottegut bzw. in dem geschlossenen Behälter ändern. Dies kann zu Schwierigkeiten führen. Wenn das Klima in dem Rottegut zu trocken wird, kann die weitere Durchführung des Kompostierungsprozesses gefährdet sein. Wenn das Klima in dem Rottegut zu feucht bzw. zu naß wird, kann es vorkommen, daß eine einwandfreie Durchlüftung des Rottegutes nicht mehr gewährleistet ist. Die Effizienz des in dem Rottegut stattfindenden biologischen Stoffwechsels ist sehr wesentlich von der Gestaltung der Luftführungswege durch das Rottegut abhängig. Das Rottegut befindet sich als Schüttgut in dem geschlossenen Behälter. Wenn das Klima in dem Behälter zu feucht bzw. zu naß wird, kann sich die Konsistenz der Schüttung derart verschlechtern, daß eine gleichmäßige Durchströmung nicht mehr gewährleistet ist. Es können sogenannte Luftdurchbrüche entstehen. Um eine gleichmäßige Durchströmung zu erreichen, werden entsprechend der DE-OS 36 37 393 gleichmäßig über die Bodenfläche verteilte Löcher verwendet. Auch dann kann es bei einem zu feuchten bzw. zu nassem Klima jedoch zu einer Kanalbildung mit Luftdurchbruch kommen.

Aus der EP-A-0 458 136 ist ein Verfahren zur Kompostierung von Abfällen bekannt, bei dem Rottegut in einem geschlossenen Behälter unter Zwangsbelüfung mikrobiologisch abgebaut wird. Die aus dem Rottegut austretende Abluft wird dem Rottegut erneut zugeführt. Das Rottegut besteht aus biologisch leichter und biologisch schwerer abbaubaren Kohlendioxid-Wasserstofff-Verbindungen. Die Zuführung von Sauerstoff erlaubt den aeroben Organismen, diese Verbindungen aufzulösen und daraus nicht nur die zur eigenen Existenz erforderliche Energie zu gewinnen, sondern auch infolge einer in kleinen Schritten verlaufenden sogenannten "biochemischen Knallgasreaktion" eine daraus resultierende Wärmeenergiemenge freizusetzen.

Aufgabe der Erfindung ist es, ein Verfahren zur Ermittlung der Energie (thermische Energie, Enthalpie), die bei der Kompostierung von organischen Stoffen (Rottegut) in einem geschlossenen Behälter unter Zwangsbelüftung mikrobiologisch erzeugt wird, zu schaffen.

Erfindungsgemäß wird diese Aufgabe durch die kennzeichnenden Merkmale des Anspruchs 1 gelöst.

Die bei der Kompostierung erzeugte Energie kann laufend ermittelt werden und zur Steuerung und/oder Regelung des Kompostierungsverfahrens verwendet werden.

Die Erfindung beruht auf folgenden Erkenntnissen: Die bei dem mikrobiologischen Abbau organischer Substanz in dem Rottegut entstehende Energie stammt ausschließlich aus der biochemischen Knallgasreaktion, also daraus, daß Wasserstoff und Sauerstoff zu Wasser verbunden werden. Durch die biochemische Knallgasreaktion wird zum einen Trockensubstanz abgebaut, d.h. in Wasser verwandelt, zum anderen wird Energie erzeugt. Die Masse der abgebauten Trockensubstanz ist dabei genauso groß wie die Masse des im Behälter erzeugten Wassers. Die Menge der erzeugten Energie kann aus der Masse des erzeugten Wassers (und damit aus der Masse der abgebauten Trockensubstanz) ermittelt werden (und zwar aus der verfügbaren Wasserbildungsenergie von 2.905,6 kcal/kg $H_2O$). Diese erzeugte Energie wird ausschließlich dazu verwendet, Wasser (und zwar sowohl Wasser, das durch die biologische Knallgasreaktion erzeugt wurde, als auch freies Wasser) im Rottegut zu verdampfen. Damit liefert die aus dem Rottegut mit der Abluft heraustransportierte, als Wasserdampf vorliegende Wassermenge ein Maß für die in dem Rottegut erzeugte Energie. Die aus dem Rottegut mit der Abluft herausgeführte Wassermenge ist wiederum genauso groß wie die aus der Abluft auskondensierte Wassermenge. Im Endergebnis kann damit aus der Energie des aus der Abluft auskondensierten Wassers auf die in dem Rottegut biologisch erzeugte Energie geschlossen werden.

Dieser Zusammenhang kann erfindungsgemäß für die Steuerung bzw. Regelung des Rottevorgangs verwendet werden.

Die Erfindung nutzt ein Verfahren zur Ermittlung der Menge des Wassers, das bei der Kompostierung von organischen Stoffen (Rottegut) in einem geschlossenen Behälter unter Zwangsbelüftung mikrobiologisch gebildet wird. Dieses Wasser entsteht aus der "Tätigkeit" der Mikroorganismen, und zwar - wie bereits ausgeführt - durch die sogenannte biologische Knallgasreaktion.

Bei dem Verfahren zur Ermittlung der Menge des bei der Kompostierung entstehenden Wassers werden der Wassergehalt und die Enthalpie in der Zuluft und in der Abluft gemessen bzw. bestimmt und daraus die Menge des in dem Behälter mikrobiologisch gebildeten Wassers ermittelt. Bei der Zuluft handelt es sich dabei um die in den Behälter eingeführte Luft, bei der Abluft um die aus dem Behälter herausgeführte Luft.

Bei einem weiteren Verfahren zur Ermittlung der Menge des Wassers, das bei der Kompostierung von organischen Stoffen (Rottegut) in einem geschlossenen Behälter unter Zwangsbelüftung mikrobiologisch gebildet wird, wird die Abnahme des Gewichts des Rotteguts gemessen bzw. bestimmt. Um die Gewichtsabnahme des Rotteguts zu bestimmen, kann das Gewicht des Rotteguts in bestimmten Zeitabständen oder kontinuierlich gemessen werden. Aus der Differenz von zwei in einem Zeitabstand durchgeführten Gewichtsmessungen kann auf die Gewichtsabnahme des Rotteguts geschlossen werden. Dabei ist es nicht erforderlich, daß (Netto-) Gewicht des Rotteguts zu messen. Da es nur auf die Gewichtsabnahme des Rotteguts ankommt, kann auch das (Brutto-) Gewicht des Rotteguts und weiterer Anlagenteile gemessen werden.

Die Verfahren zur Ermittlung der Masse des bei der Kompostierung gebildeten Wassers können für die Durchführung des erfindungsgemäßen Verfahrens zur Ermittlung der bei der Kompostierung erzeugten Energie verwendet werden.

Die Erfindung betrifft ferner ein Verfahren zur Steuerung und/oder Regelung eines Verfahrens zur Kompostierung von organischen Stoffen (Rottegut), bei dem das Rottegut in einem geschlossenen Behälter unter Luftzuführung biologisch abgebaut wird.

Die Aufgabe, ein verbessertes derartiges Verfahren zu schaffen, wird erfindungsgemäß dadurch gelöst, daß die Energie und/oder die Wassermenge nach einem der vorgenannten, erfindungsgemäßen Verfahren bestimmt werden und für die Steuerung und/oder Regelung des Kompostierungsverfahrens verwendet werden.

Schließlich betrifft die Erfindung ein Verfahren zum Kompostieren von organischen Stoffen (Rottegut), bei dem das Rottegut in einem geschlossenen Behälter unter Luftzuführung biologisch abgebaut wird, wobei zumindest ein Teil der Abluft dem Rottegut erneut zugeführt wird und wobei die Abluft gekühlt und der darin enthaltene Wasserdampf zumindest zum Teil auskondensiert wird. Um ein derartiges Verfahren zu optimieren, wird erfindungsgemäß vorgeschlagen, daß die Kühlleistung und/oder die Gebläseleistung so eingestellt werden, daß pro Zeiteinheit eine bestimmte Menge Kondensat erzeugt wird. Vorzugsweise wird die Abluft in einem Wärmetauscher gekühlt. Dann werden die Kühlleistung des Wärmetauschers und/oder die Gebläseleistung des die Zwangsbelüftung des Behälters durchführenden Gebläses so eingestellt, daß pro Zeiteinheit eine bestimmte Menge Kondensat in dem Wärmetauscher erzeugt wird.

Vorzugsweise wird die zu erzeugende Kondensatmenge pro Zeiteinheit aus einer vorgegebenen Abbaurate ermittelt, wobei diese Abbaurate vorzugsweise 20 % beträgt.

Ausführungsbeispiele der Erfindung werden nachstehend anhand der beigefügten Zeichnung im einzelnen erläutert. In der Zeichnung zeigt

Fig. 1 einen geschlossenen Behälter zur Durchführung des Verfahrens in einer schematischen Darstellung,

Fig. 2 den Verlauf der Masse des Rottegutes und der Masse der darin enthaltenen Trockensubstanz über der Zeit in einem Beispielsfall,

Fig. 3    ein T-S-Diagramm der Wärmeaufnahme der Luft in dem Rottegut und

Fig. 4    ein T-S-Diagramm der Wärmeabgabe der Abluft außerhalb des Rottegutes.

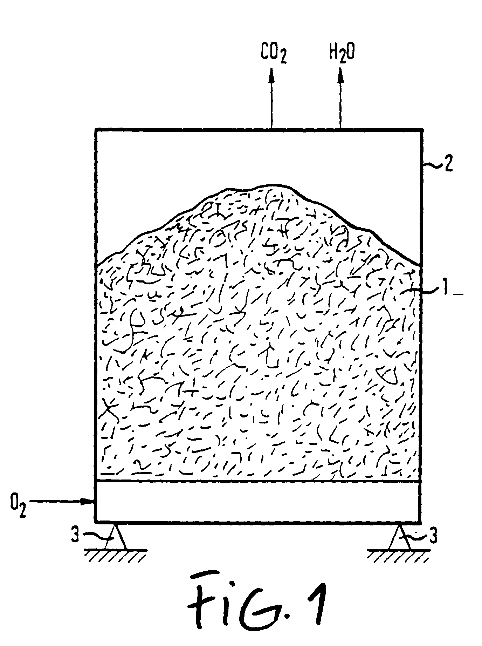

Wie in Fig. 1 schematisch gezeigt, wird dem Rottegut 1, das sich in dem geschlossenen Behälter 2 befindet, Sauerstoff $O_2$ enthaltende Zuluft zugeführt. Aus dem geschlossenen Behälter wird Kohlendioxid $CO_2$ und Wasser $H_2O$ enthaltende Abluft abgeführt. Der geschlossene Behälter 2 ruht auf Meßaufnehmern 3, die eine Gewichtsmessung und damit eine Messung der Masse des Rottegutes durchführen können. Aus der Messung der Masse des Rottegutes kann die pro Zeiteinheit auftretende Abnahme der Masse des Rottegutes bestimmt werden. Die Massenabnahme kann auch dann bestimmt werden, wenn nicht die (Netto-) Masse des Rottegutes gemessen wird, sondern eine auch die Masse weiterer Anlagenteile einschließende (Brutto-) Masse, da es nur auf Massedifferenzen ankommt.
Das Rottegut 1 wird zunächst in den Behälter 2 eingebracht. Anschließend wird der Behälter geschlossen und das Rottegut wird unter Luftzuführung mikrobiell abgebaut.

1. Beispiel:

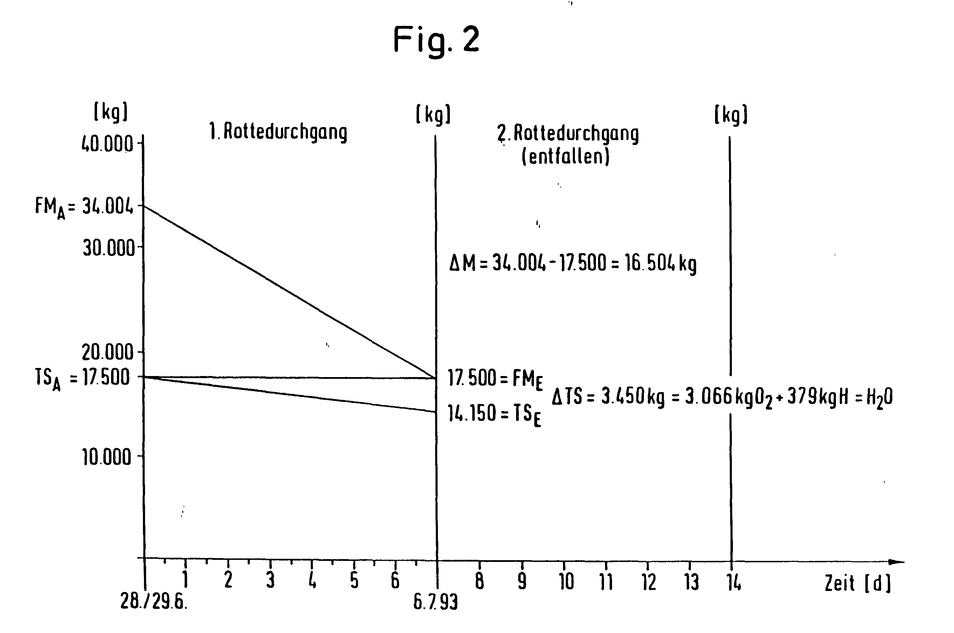

In einem praktisch durchgeführten Beispiel haben sich dabei die in Fig. 2 graphisch dargestellten Verhältnisse ergeben. In den geschlossen Behälter wurden organische Stoffe, nämlich eine Frischmasse am Anfang $FM_A$, von 34.004 kg eingebracht. Anhand einer Probe wurde die relative Feuchtigkeit der Frischmasse zu 48,5 % ermittelt. Die Trockenmasse (Trockensubstanz) $TS_A$ der Frischmasse am Anfang betrug dementsprechend 51,5 % der Frischmasse am Anfang, also 51,5 % von 34.004 kg, demnach 17.500 kg.
Der Rottevorgang wurde eine Woche, also sieben Tage bzw. 168 Stunden, durchgeführt. Nach dieser Zeit betrug die Masse des Rotteguts, also die Frischmasse am Ende $FM_E$ 17.500 kg. Erneut wurde die relative Feuchtigkeit gemessen. Sie betrug 19,1 %. Damit betrug die Trockenmasse am Ende $TS_E$ 18,9 % von 17.500 kg, also 14.150 kg.
Der Massenunterschied $\Delta$ M errechnet sich daraus zu 34.004 - 17.500 = 16.504 kg. Der Unterschied in der Trockenmasse errechnet sich zu $\Delta$ TS = 17.500 - 14.150 = 3.450 kg. Aus Fig. 2 ist ersichtlich, daß der Massenabbau linear (also längs einer Geraden) verläuft.

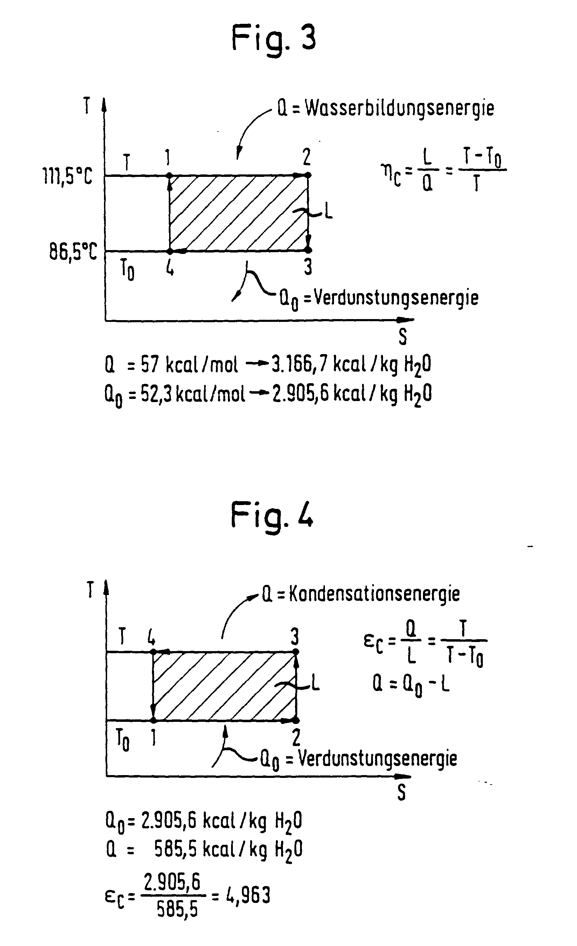

a) Die Energieerzeugung durch den Rotteprozeß erfolgt im Wege der sogenannten biochemischen Knallgasreaktion (Prof. Dr. Hans G. Schlegel, Dr. Karin Schmidt, Allgemeine Mikrobiologie, 5. Aufl., Georg Thieme Verlag, Stuttgart, New York, 1981, Seite 232). Die Energieerzeugung durch diese biochemische Knallgasreaktion und die Abgabe der Energie an die Luft in dem geschlossenen Behälter ist in der Fig. 3 schematisch dargestellt. Die Wasserbildungsenergie Q aus der biochemischen Knallgasreaktion beträgt 57 kcal/mol bzw. 3.166,7 kcal/kg $H_2O$. Da diese Energie von lebenden Zellen geliefert wird, steht sie nicht vollständig zur Verfügung; nur die verfügbare Wasserbildungsenergie 52,3 kcal/mol bzw. 2.905,6 kcal/kg $H_2O$ wird von dem Rottegut auf die Luft übertragen, und zwar als Verdunstungsenergie $Q_0$. Dies ergibt einen thermischen Wirkungsgrad $\eta_C$ von (Q - $Q_0$)/Q = (57 - 52,3)/57 = 4,7/57 = 0,08246, gleichbedeutend mit einem sehr geringen Verlust an mikrobieller Wasserbildungsenthalpie.
Nimmt man für die Temperatur T, bei der die Wasserbildungsenergie Q aus der biochemischen Knallgasreaktion entsteht, 111,5° C an, so ergibt sich nach Fig. 3 aus Q = 57 kcal/mol und $Q_0$ = 52,3 kcal/mol eine Temperatur $T_0$ für die Temperatur bei der Abgabe der Verdunstungsenergie vom Rottegut auf die Luft von 86,5° C.

b) Die mit Kohlendioxid $CO_2$ und Wasserdampf $H_2O$ beladene Abluft wird außerhalb des geschlossenen Behälters abgekühlt, beispielsweise in einem Wärmetauscher, vorzugsweise einem Luft-Luft-Wärmetauscher oder einem Luft-Wasser-Wärmetauscher. Die dort stattfindenden Vorgänge sind in Fig. 4 schematisch dargestellt. Bei der Temperatur $T_0$ wird die Verdunstungsenergie $Q_0$ zugeführt. Diese Verdunstungsenergie $Q_0$ beträgt - wie oben ausgeführt - 52,3 kcal/mol bzw. 2.905,6 kcal/kg $H_2O$. Es sei angenommen, daß die Kondensation in dem Wärmetauscher bei einer Temperatur von 21° C erfolgt. Dann beträgt die Kondensationsenergie Q von Wasser 585,5 kcal/kg $H_2O$. Die Leistungsziffer $\varepsilon_C$ errechnet sich damit zu $Q_0$/Q = 2.905,6/585,5 = 4,963. Dies ist eine verhältnismäßig hohe Leistungsziffer.
Der biothermische Wirkungsgrad $\eta_S$ kann wie folgt bestimmt werden:

$$\eta_S = 1/\varepsilon_C = 585,5/2.905,6 = 0,2015$$

c) Die oben bereits angegebene, biologisch erreichbare Maximaltemperatur von $T_M$ = 111,5° C (Temperatur T in Fig. 3) kann wie folgt berechnet werden:
Wenn Luft 1 kg $H_2O$ aufnehmen soll, beträgt die Temperatur ausweislich des i-x-Diagramms $T_S$ = 86,5° C bei Sättigung. Dies entspricht $T_S = 273 + 86,5 = 359,5°$ K.

Die im Mikroorganismus geleistete Arbeit kann wie folgt bestimmt werden: Die Wasserbildungsenergie Q beträgt (siehe oben) 3.166,7 kcal/kg $H_2O$. Hiervon benötigt der Mikroorganismus selbst die Energie L = 261,1 kcal/kg $H_2O$. Damit verbleibt als Verdunstungsenergie $Q_0$ die Differenz Q - L = 3.166,7 - 261,1 = 2.905,6 kcal/kg $H_2O$. Dies ergibt, wie oben bereits ausgeführt, einen Wirkungsgrad $\eta_C = 0,08246$. Der durch die innere Arbeit im Mikroorganismus entstehende Temperaturabfall $\Delta T$ kann damit mit $T_0 = 273°$ K wie folgt berechnet werden:

$$\Delta T = \frac{T_0}{1 - \eta_C} - T_0 = \frac{273}{1 - 0,08246} - 273 =$$

$$298 - 273 = 25° \text{ K}$$

Daraus errechnet sich die theoretisch durch die biochemische Knallgasreaktion maximal erreichbare Temperatur $T_M$ wie folgt:

$$T_M = T_S + \Delta T = 359,5 + 25 = 384,5° \text{ K}$$

Dies entspricht einer Temperatur von $T_M = 111,5°$ C.

$T_S = 86,5°$ C ist die maximale Temperatur, die in der Praxis nach außen vom Mikroorganismus abgegeben werden kann.

2. Beispiel:

30.000 kg organische Stoffe (Rottegut) werden in den geschlossenen Behälter eingebracht. Die relative Feuchtigkeit dieses Rottegutes beträgt 50 %. Dies bedeutet, daß sich in dem geschlossenen Behälter 15.000 kg Wasser $H_2O$ und 15.000 Trockensubstanz befinden.

Vorgegeben wird eine Abbaurate von 20 %. Dies bedeutet, daß 20 %, also 3.000 kg, der 15.000 kg Trockensubstanz abgebaut werden sollen. Die Verlustmenge an Trockensubstanz beträgt also 3.000 kg.

Da der Trockensubstanzverlust, also der Masseverlust an Trockensubstanz, genauso groß ist wie die Masse des durch die biochemische Knallgasreaktion im Behälter erzeugten Wassers, kann über die massenbezogene verfügbare Wasserbildungsenergie, die genauso groß ist wie die massenbezogene Verdunstungsenergie $Q_0 = 2.905,6$ kcal/kg $H_2O$, aus der Verlustmenge an Trockensubstanz auf die Verdunstungsenergie $Q_0$ geschlossen werden. Einem Verlust von 1 kg Trockensubstanz entspricht eine Verdunstungsenergie von 2.905,6 kcal. Bei einem Trockensubstanz-Verlust von 3.000 kg entsteht also in dem Rottegut eine Verdunstungsenergie von 3.000 x 2.905,6 = 8.716.500 kcal.

Diese im Rottegut entstehende Energiemenge wird dazu verwendet, Wasser zu verdampfen, welches mit der Abluft aus dem geschlossenen Behälter herausgeführt wird und welches dann außerhalb des Behälters kondensiert wird. Diese Kondensation findet bei 21° C statt. Aus der Energiemenge von 8.716.500 kcal und der Kondensationsenergie bei 21° C von 585,5 kcal/kg kann die Kondensatmenge wie folgt errechnet werden: Kondensatzmenge = Energie/Kondensationsenergie = 8.716.500 kcal/(585,5 kcal/kg) = 14.887 kg $H_2O$.

Der Rottevorgang dauert sieben Tage, also 168 Stunden. Damit müssen pro Stunde 14.887/168 = 88,6 kg Kondensatwasser erzeugt werden.

Die Kühltemperatur, also die Ausgangstemperatur des Wärmetauschers, und/oder die pro Zeiteinheit zugeführte Luftmenge (also die Gebläseleistung) werden so eingestellt, daß pro Stunde 88,6 kg Kondensat anfallen.

Durch die Erfindung wird ein Verfahren zur Steuerung des Wassergehaltes von Kompost in Kompostierungsbehältern geschaffen. Das Verfahren wird auf der Grundlage des Carnot'schen Kreisprozesses durch Zustandsänderung der Luft, die zum Zweck des aeroben biologischen Abbaus durch das Rottegemisch hindurchgeführt wird, nach dem i-x-Diagramm gesteuert. Bei dem Durchtritt der Luft durch das Rottegut wird eine Zustandsänderung dieser Luft bei konstanter Temperatur angestrebt, wobei die Luft bis zur Sättigung Feuchtigkeit aufnehmen kann. Dieser Vorgang vollzieht sich in unendlich kleinen Teilschritten, da die Luft beim Durchströmen eines porenhaltigen feuchten Gemisches nach Eintritt in einen neuen (Mikroporen-) Raum isotherm bis zur Sättigung aus der Umgebung Feuchtigkeit aufnimmt, wenn ihr Wärme aus einer mikrobiologischen Reaktion zugeführt wird. Da in dem Rottegut eine mikrobiologische Reaktion stattfindet, wird die durchströmende Luft unter Wärmezufuhr, aber ohne Temperaturerhöhung bis zur Sättigung mit Wasser angereichert.

Wenn keine mikrobiologische Reaktion (mehr) stattfindet oder wenn sich das Ausmaß der mikrobiologischen Reaktion stark vermindert, wie dies beispielsweise dann der Fall ist, wenn die biologisch leicht abbaubare Substanz abgebaut worden ist, kann der Luft keine Wärme mehr zugeführt werden bzw. wird der Luft nur noch wesentlich weniger Wärme zugeführt. Gleichwohl nimmt die Luft nach wie vor noch Wasser auf. Hierdurch trocknet das Rottegemisch aus. Als Folge kühlt sich die Luft ab. Ferner findet eine Rückkühlung des Rottegemisches statt. Anhand der Austrocknung des Rottegemisches, die sich in einer Kühlung bzw. weniger starken Erwärmung der Luft auswirkt, kann also festgestellt werden, daß die biologisch leicht abbaubare Substanz abgebaut worden ist. Dann ist die Zustandsänderung der Luft im Rottegemisch adiabat oder doch zumindest annähernd adiabat, so daß das Rottegemisch kühlt und austrocknet. Da kein biologischer Abbau mehr stattfindet bzw. nur noch ein stark verminderter Abbau, kommt auch die biologische Knallgasreaktion vollständig oder doch zumindest sehr stark zum Erliegen, so daß sich kein Wasser mehr bildet.

Die Luft, die das Rottegut durchströmt hat und die dabei Wasser aufgenommen hat, wird außerhalb des Rottegemisches entlang der Sättigungslinie abgekühlt, bis zu einer Temperatur, die der gewünschten Feuchtigkeit entspricht. Diese derart abgekühlte und getrocknete Luft wird nun dem Rottegemisch wieder zugeführt. Der verbrauchte Sauerstoff kann dabei ersetzt werden durch reinen Sauerstoff oder durch Umgebungsluft (Frischluft). Das durch Abkühlung entstehende Kondensatwasser kann aus dem Kreislauf kontrolliert ausgeschleust werden. Ebenso kann die überschüssige Gasmenge (ein Gemisch aus $CO_2$, Luft und sonstigen Stoffwechselprodukten) aus dem Kreislauf kontrolliert ausgeschleust werden.

Die kondensierte Wassermenge entspricht der infolge mikrobiologischer Reaktion (sogenannte "biochemische Knallgasreaktion") verdunsteten Wassermenge (entsprechend dem Carnot'schen Kreisprozeß), wobei berücksichtigt werden muß, daß als freie Verdunstungswärme nur 52,3 kcal/mol $H_2O$ von 56,8 kcal/mol $H_2O$-Bildungsenthalpie zur Verfügung stehen, da die Differenz für den mikrobiellen Betriebsstoffwechsel verbraucht wird. Die thermische Energie zur Verdunstung von Wasser stammt bei dem aeroben mikrobiellen Stoffwechsel einzig und allein aus der chemischen Reaktion zwischen Sauerstoff und Wasserstoff, nämlich aus dem Glukoseabbau als letztem Schritt der Rückwandlung organischer Substanz. Dies bedeutet, daß über die Zustandsänderung der Luft hinsichtlich ihres Wassergehalts und ihrer Enthalpie die Menge des mikrobiologisch gebildeten Wassers bestimmt werden kann. Da die Kondensation des Wasserdampfes außerhalb des Kompostierungsbehälters erfolgt, ist die Gewichtsabnahme im Behälter gleich der kondensierten Wassermenge.

Zur Bestimmung der Luftmenge und des Luftzustandes bei Wiedereintritt der Luft in das Rottegemisch ist es erforderlich, den Wassergehalt des Rottegemisches am Anfang zu kennen und den gewünschten Endwassergehalt festzulegen. Die erforderliche Luftmenge orientiert sich an der isotherm verlaufenden Wasseraufnahme der Luft bis zur Sättigung in Abhängigkeit von der Umgebungstemperatur im Porenklima des Rottegutes. Zur Aufrechterhaltung eines optimalen Porenklimas wird das mikrobiell gebildete Wasser und das die relative Materialfeuchte erhöhende freie Wasser mit der Luft abgeführt und danach aus der Umluft auskondensiert. Die Umluft wird dann wieder in dem Zustand (Temperatur, Feuchte, $O_2$-Gehalt) in das Rottegut zurückgeführt, der einen optimalen biologischen Abbau der organischen Substanz gewährleistet. Die zugeführte frische Sauerstoffmenge und die damit verbundene Ableitung verbrauchter Luft richtet sich nach dem Sauerstoffverbrauch der Mikroorganismen. Dadurch, daß eine größere Luftmenge im Umlauf gehalten wird als zur Sauerstoffversorgung eigentlich erforderlich ist, wird das Porenvolumen durch einen geringen Überdruck aufrechterhalten.

Nach einer vorteilhaften Weiterbildung des Verfahrens kann durch die Rücknahme der Kühlwirkung auf die Umluft die Temperatur im Rottegut auf 50° bis 85° C angehoben werden, um dadurch eine sichere Hygienisierung, also eine Abtötung vegetativer pathogener Keime, durchzuführen.

**Patentansprüche**

1. Verfahren zur Ermittlung der Energie, die bei der Kompostierung von organischen Stoffen (Rottegut) in einem geschlossenen Behälter unter Zwangsbelüftung mikrobiologisch erzeugt wird,
   **dadurch gekennzeichnet,**

   **daß** die Menge des Wassers ermittelt wird, das bei der Kompostierung aus der Abluft auskondensiert wird (Kondensatmenge),

   und **daß** die mikrobiologisch erzeugte Energie nach der Formel

   Energie = Kondensatmenge x Kondensationsenergie

   ermittelt wird.

2. Verfahren zur Steuerung und/oder Regelung eines Verfahrens zum Kompostieren von organischen Stoffen (Rottegut), bei dem das Rottegut in einem geschlossenen Behälter unter Luftzuführung biologisch abgebaut wird,

**dadurch gekennzeichnet,**
**daß** die Energie nach dem Verfahren nach Anspruch 1 bestimmt wird und für die Steuerung und/oder Regelung des Kompostierungsverfahrens verwendet wird.

3. Verfahren zum Kompostieren von organischen Stoffen (Rottegut), bei dem das Rottegut in einem geschlossenen Behälter unter Luftzuführung biologisch abgebaut wird, wobei zumindest ein Teil der Abluft dem Rottegut erneut zugeführt wird und wobei die Abluft gekühlt und der darin enthaltene Wasserdampf zumindest zum Teil auskondensiert wird,
**dadurch gekennzeichnet,**
**daß** die Kühlleistung und/oder die Gebläseleistung so eingestellt werden, daß pro Zeiteinheit eine bestimmte gleichbleibende Menge Kondensat erzeugt wird.

4. Verfahren nach Anspruch 3, **dadurch gekennzeichnet, daß** die zu erzeugende Kondensatmenge pro Zeiteinheit aus einer vorgegebenen Abbaurate von beispielsweise 20% ermittelt wird.


## Claims

1. Process for determining the energy which is generated microbiologically during the composting of organic substances (material undergoing biodegradation) in a closed container with forced aeration, **characterized in that** the quantity of water which is condensed out of the outgoing air during the composting (condensate quantity) is determined, and **in that** the microbiologically generated energy is determined using the formula

$$\text{energy} = \text{condensate quantity} \times \text{condensation energy}.$$

2. Process for controlling and/or regulating a process for composting organic substances (material undergoing biodegradation), in which the material undergoing biodegradation is biodegraded in a closed container with air being supplied, **characterized in that** the energy is determined using the process according to Claim 1 and is used for controlling and/or regulating the composting process.

3. Process for composting organic substances (material undergoing biodegradation), in which the material undergoing biodegradation is biodegraded in a closed container with air being supplied, at least a part of the outgoing air being fed back to the material undergoing biodegradation and the outgoing air being cooled and the water vapour contained therein being at least partially condensed out, **characterized in that** the cooling capacity and/or the fan capacity being set in such a way that a defined, constant quantity of condensate is generated per unit time.

4. Process according to Claim 3, **characterized in that** the condensate quantity to be generated per unit time is determined from a preset degradation rate of, for example, 20%.


## Revendications

1. Procédé de détermination de l'énergie qui est produite microbiologiquemeht lors du compostage de matières organiques (produit de fermentation) dans un récipient fermé sous aération forcée, **caractérisé en ce que** la quantité d'eau est déterminée qui, lors du compostage, est sortie par condensation (quantité de condensat) de l'air d'échappement, et **en ce que** l'énergie produite microbiologiquement est déterminée d'après la formule

$$\text{énergie} = \text{quantité de condensat} \times \text{énergie de condensation}.$$

2. Procédé de commande et/ou de réglage d'un procédé de compostage de matières organiques (produit de fermentation), dans lequel le produit de fermentation est dégradé biologiquement dans un récipient fermé sous amenée d'air, **caractérisé en ce que** l'énergie est déterminée suivant le procédé selon la revendication 1 et est utilisée pour la commande et/ou le réglage du procédé de compostage.

3. Procédé de compostage de matières organiques (produit de fermentation), où le produit de fermentation est dégradé biologiquement dans un récipient fermé sous amenée d'air, où au moins une partie de l'air d'échappement est ramenée au produit de fermentation, et où l'air d'échappement est refroidi et la vapeur d'eau contenue dans celui-ci est sortie par condensation au moins en partie, **caractérisé en ce que** la puissance de refroidissement et/ou la puissance de soufflerie sont réglées de façon que, par unité de temps, une quantité déterminée constante de condensat soit produite.

4. Procédé selon la revendication 3, **caractérisé en ce que** la quantité de condensat à produire par unité de temps est déterminée à partir d'un taux de dégradation prédéterminé de, par exemple, 20%.

FIG. 1

# Fig. 2

1. Rottedurchgang

2. Rottedurchgang (entfallen)

$FM_A = 34.004$

$TS_A = 17.500$

$17.500 = FM_E$

$14.150 = TS_E$

$\Delta M = 34.004 - 17.500 = 16.504 \, kg$

$\Delta TS = 3.450 \, kg = 3.066 \, kgO_2 + 379 \, kgH = H_2O$

28./29.6.  6.7.93

Zeit [d]

EP 0 776 874 B1

## Fig. 3

Q = Wasserbildungsenergie

$$\eta_C = \frac{L}{Q} = \frac{T - T_0}{T}$$

$Q_0$ = Verdunstungsenergie

$Q = 57\ kcal/mol \rightarrow 3.166,7\ kcal/kg\ H_2O$

$Q_0 = 52,3\ kcal/mol \rightarrow 2.905,6\ kcal/kg\ H_2O$

## Fig. 4

Q = Kondensationsenergie

$$\varepsilon_C = \frac{Q}{L} = \frac{T}{T - T_0}$$

$$Q = Q_0 - L$$

$Q_0$ = Verdunstungsenergie

$Q_0 = 2.905,6\ kcal/kg\ H_2O$

$Q = 585,5\ kcal/kg\ H_2O$

$$\varepsilon_C = \frac{2.905,6}{585,5} = 4,963$$